# EUROPEAN PATENT APPLICATION

(11) **EP 4 726 006 A1**
(43) Date of publication of application: **15.04.2026**
(21) Application number: 24819256.9
(22) Date of filing: 31.05.2024
(51) Int. Cl.: C09J 7/38, C09J 11/06, C09J 133/00, C09J 143/04

(54) **PRESSURE-SENSITIVE ADHESIVE SHEET**

(30) Priority: 09.06.2023 JP 2023095667
(71) Applicant: Nitto Denko Corporation, Osaka 567-8680 (JP)
(72) Inventor: MATSUOKA Toru, Ibaraki-shi, Osaka 567-8680 (JP); SHIBANO Masaya, Ibaraki-shi, Osaka 567-8680 (JP); NAKAYAMA Junichi, Ibaraki-shi, Osaka 567-8680 (JP); TANAKA Shota, Ibaraki-shi, Osaka 567-8680 (JP)
(74) Representative: Hoffmann Eitle
(86) International application number: PCT/JP2024/019971
(87) International publication number: WO 2024/253026

(57) **Abstract**

The present invention provides a pressure-sensitive adhesive sheet that includes a pressure-sensitive adhesive layer formed from a pressure-sensitive adhesive composition containing a water-dispersed polymer, and that is suitable for suppressing irritation of skin during use. A pressure-sensitive adhesive sheet (10) of the present invention includes a pressure-sensitive adhesive layer (1) formed from a pressure-sensitive adhesive composition containing a water-dispersed polymer. In the pressure-sensitive adhesive sheet (10), the pressure-sensitive adhesive layer (1) has a moisture permeability (P) of 900 g/(m^{2·}24 h) or more, which is determined by the following test. Test: a laminate (20) including the pressure-sensitive adhesive layer (1) having a thickness of 25 µm and a polyurethane film (5) having a thickness of 30 µm is produced. The laminate (20) is bonded to a glass vessel (30) accommodating water (35) so as to close an opening (31) of the glass vessel (30). The glass vessel (30) is allowed to stand for 24 hours under the conditions of a temperature of 40°C and a humidity of 30%RH. A weight of water that has permeated the laminate (20) from the inside of the glass vessel (30) is determined. A ratio of the weight (g) to an opening area (m²) of the opening (31) is specified as the moisture permeability (P).

## Description

### TECHNICAL FIELD

The present invention relates to a pressure-sensitive adhesive sheet.

### BACKGROUND ART

As an example of a pressure-sensitive adhesive sheet, a medical pressure-sensitive adhesive sheet that is attached to skin or the like and used has been known. The medical pressure-sensitive adhesive sheet is used for the purposes of protection of an affected area, percutaneous absorption of a drug, fixation of gauze or a tube, and the like. Such pressure-sensitive adhesive sheet generally includes a pressure-sensitive adhesive layer, and the pressure-sensitive adhesive sheet can be attached to skin or the like via the pressure-sensitive adhesive layer.

The pressure-sensitive adhesive layer included in the pressure-sensitive adhesive sheet can be formed by curing a pressure-sensitive adhesive composition including a polymer. For example, in Patent Literatue 1, there is a description of production of a pressure-sensitive adhesive layer by curing a pressure-sensitive adhesive composition containing a (meth)acrylic polymer and an isocyanate-based crosslinking agent.

### CITATION LIST

### Patent Literature

Patent Literature 1: JP 2006-213603 A

### SUMMARY OF INVENTION

### Technical Problem

A typical pressure-sensitive adhesive sheet is produced by, for example, the following method. First, a crosslinking agent and the like are mixed with a polymer synthesized by polymerization of a monomer group in an organic solvent to prepare a pressure-sensitive adhesive composition. The pressure-sensitive adhesive composition is applied to a release liner, the organic solvent is removed by heating, and further, heat aging is conducted as required, to thereby produce a pressure-sensitive adhesive layer. A pressure-sensitive adhesive sheet can be produced by bonding the obtained pressure-sensitive adhesive layer to a base material. In this production process, when the organic solvent removed by heating is discharged into the atmosphere as it is, a significant adverse effect on the surrounding environment may be caused. Accordingly, the organic solvent is often burned in a deodorizing furnace or the like and then discharged. In this case, not only an extra fuel is required for the burning of the organic solvent in the deodorizing furnace, but also the organic solvent itself is converted into CO₂ through burning and is discharged into the atmosphere. Thus, a CO₂ emission in this production process is extremely large.

In recent years, climate change caused by greenhouse gases has become an urgent issue, and governments of various countries have been setting numerical targets and working to reduce CO₂ emissions. Even in production of a pressure-sensitive adhesive sheet, a production process that uses no organic solvent and has low CO₂ emissions is required to be selected.

When a pressure-sensitive adhesive layer is produced by using a pressure-sensitive adhesive composition containing a water-dispersed polymer, a usage amount of an organic solvent can be greatly reduced, and hence CO₂ emissions can also be greatly reduced. However, according to investigations made by the inventors of the present invention, when a pressure-sensitive adhesive sheet including a pressure-sensitive adhesive layer, which is formed from a pressure-sensitive adhesive composition containing a water-dispersed polymer, is attached to skin, the skin tends to become irritated.

An object of the present invention is to provide a pressure-sensitive adhesive sheet that includes a pressure-sensitive adhesive layer formed from a pressure-sensitive adhesive composition containing a water-dispersed polymer, and that is suitable for suppressing irritation of skin during use.

### Solution to Problem

As a result of intensive investigations, the inventors of the present invention have found that the moisture permeability of a pressure-sensitive adhesive layer correlates with irritation of skin, and have further made investigations, thereby completing the present invention.

According to one embodiment of the present invention, there is provided a pressure-sensitive adhesive sheet, including a pressure-sensitive adhesive layer formed from a pressure-sensitive adhesive composition containing a water-dispersed polymer, wherein the pressure-sensitive adhesive layer has a moisture permeability of 900 g/(m^{2·}24 h) or more, which is determined by the following test:
Test: a laminate including the pressure-sensitive adhesive layer having a thickness of 25 µm and a polyurethane film having a thickness of 30 µm is produced; the laminate is bonded to a glass vessel accommodating water so as to close an opening of the glass vessel; the glass vessel is allowed to stand for 24 hours under conditions of a temperature of 40°C and a humidity of 30%RH, and a weight of water that has permeated the laminate from the inside of the glass vessel is determined; and a ratio of the weight (g) to an opening area (m²) of the opening is specified as the moisture permeability.

### Advantageous Effects of Invention

According to the present invention, the pressure-sensitive adhesive sheet that includes a pressure-sensitive adhesive layer formed from a pressure-sensitive adhesive composition containing a water-dispersed polymer, and that is suitable for suppressing irritation of skin during use can be provided.

### BRIEF DESCRIPTION OF DRAWINGS

FIG. 1 is a cross-sectional view for schematically illustrating a pressure-sensitive adhesive sheet according to one embodiment of the present invention.
FIG. 2 is a diagram for describing a test for measuring the moisture permeability of a pressure-sensitive adhesive layer.

### DESCRIPTION OF EMBODIMENTS

A pressure-sensitive adhesive sheet according to a first aspect of the present invention is a pressure-sensitive adhesive sheet including a pressure-sensitive adhesive layer formed from a pressure-sensitive adhesive composition containing a water-dispersed polymer, wherein the pressure-sensitive adhesive layer has a moisture permeability of 900 g/(m^{2·}24 h) or more, which is determined by the following test:
Test: a laminate including the pressure-sensitive adhesive layer having a thickness of 25 µm and a polyurethane film having a thickness of 30 µm is produced; the laminate is bonded to a glass vessel accommodating water so as to close an opening of the glass vessel; the glass vessel is allowed to stand for 24 hours under conditions of a temperature of 40°C and a humidity of 30%RH, and a weight of water that has permeated the laminate from the inside of the glass vessel is determined; and a ratio of the weight (g) of water to an opening area (m²) of the opening of the glass vessel is specified as the moisture permeability.

In a second aspect of the present invention, for example, in the pressure-sensitive adhesive sheet according to the first aspect, the water-dispersed polymer is a (meth)acrylic polymer.

In a third aspect of the present invention, for example, in the pressure-sensitive adhesive sheet according to the second aspect, the (meth)acrylic polymer has a constituent unit derived from a (meth)acrylic acid alkyl ester.

In a fourth aspect of the present invention, for example, in the pressure-sensitive adhesive sheet according to the third aspect, an average number of carbon atoms of an alkyl group in the (meth)acrylic acid alkyl ester is 7.0 or less.

In a fifth aspect of the present invention, for example, in the pressure-sensitive adhesive sheet according to the third or fourth aspect, the (meth)acrylic acid alkyl ester includes a first (meth)acrylic acid alkyl ester having an alkyl group having 1 to 7 carbon atoms.

In a sixth aspect of the present invention, for example, in the pressure-sensitive adhesive sheet according to the fifth aspect, the (meth)acrylic acid alkyl ester includes, as the first (meth)acrylic acid alkyl ester, at least one selected from the group consisting of: n-butyl acrylate; and isobutyl acrylate.

In a seventh aspect of the present invention, for example, in the pressure-sensitive adhesive sheet according to the fifth or sixth aspect, the (meth)acrylic acid alkyl ester further includes a second (meth)acrylic acid alkyl ester having an alkyl group having 8 to 12 carbon atoms.

In an eighth aspect of the present invention, for example, in the pressure-sensitive adhesive sheet according to any one of the second to seventh aspects, the (meth)acrylic polymer has a constituent unit derived from a carboxyl group-containing monomer.

In a ninth aspect of the present invention, for example, in the pressure-sensitive adhesive sheet according to any one of the second to eighth aspects, the (meth)acrylic polymer has a constituent unit derived from a silane-based monomer.

In a tenth aspect of the present invention, for example, in the pressure-sensitive adhesive sheet according to any one of the first to ninth aspects, the pressure-sensitive adhesive composition contains water as a dispersion medium.

In an eleventh aspect of the present invention, for example, in the pressure-sensitive adhesive sheet according to any one of the first to tenth aspects, the pressure-sensitive adhesive composition contains a surfactant.

In a twelfth aspect of the present invention, for example, in the pressure-sensitive adhesive sheet according to any one of the first to eleventh aspects, the pressure-sensitive adhesive composition contains an organic liquid component.

In a thirteenth aspect of the present invention, for example, in the pressure-sensitive adhesive sheet according to the twelfth aspect, the organic liquid component contains glyceryl tricaprylate.

In a fourteenth aspect of the present invention, for example, in the pressure-sensitive adhesive sheet according to any one of the first to thirteenth aspects, the pressure-sensitive adhesive composition contains particles of the water-dispersed polymer, and the particles have an average particle diameter of 200 nm or less.

In a fifteenth aspect of the present invention, for example, the pressure-sensitive adhesive sheet according to any one of the first to fourteenth aspects, further includes a base material configured to support the pressure-sensitive adhesive layer.

In a sixteenth aspect of the present invention, for example, the pressure-sensitive adhesive sheet according to any one of the first to fifteenth aspects is used for medical purposes.

Details of the present invention are described below, but the following description is not intended to limit the present invention to a certain embodiment.

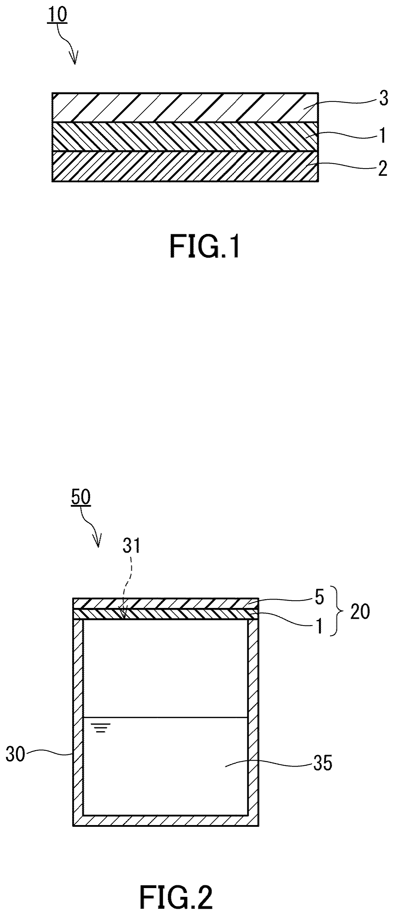

As illustrated in FIG. 1, a pressure-sensitive adhesive sheet 10 according to an embodiment of the present invention includes a pressure-sensitive adhesive layer 1. The pressure-sensitive adhesive layer 1 is formed from a pressure-sensitive adhesive composition containing a water-dispersed polymer, and is specifically a cured product of the pressure-sensitive adhesive composition. The term "pressure-sensitive adhesive sheet" as used herein is used as a term encompassing a "pressure-sensitive adhesive tape." In addition, the term "water-dispersed polymer" as used herein means a polymer emulsified in water. Specifically, in this embodiment, the pressure-sensitive adhesive composition contains water as a dispersion medium, and the water-dispersed polymer is emulsified in the water. Herein, the pressure-sensitive adhesive composition containing the water-dispersed polymer is sometimes referred to as "emulsion-based pressure-sensitive adhesive composition."

The pressure-sensitive adhesive sheet 10 may further include a base material 2 for supporting the pressure-sensitive adhesive layer 1, and a release liner 3 arranged on a surface of the pressure-sensitive adhesive layer 1. For example, the pressure-sensitive adhesive layer 1 is located between the base material 2 and the release liner 3, and is in direct contact with each of the base material 2 and the release liner 3. As an example, the pressure-sensitive adhesive sheet 10 may be used by peeling off the release liner 3 and then attaching the pressure-sensitive adhesive layer 1 to an object (e.g., skin). The pressure-sensitive adhesive sheet 10 is not limited to the above-mentioned structure. For example, the pressure-sensitive adhesive sheet 10 may be formed only of the pressure-sensitive adhesive layer 1. In addition, the pressure-sensitive adhesive sheet 10 may include two pressure-sensitive adhesive layers 1 and two release liners 3, and may have, for example, a structure in which the release liner 3, the pressure-sensitive adhesive layer 1, the base material 2, the pressure-sensitive adhesive layer 1, and the release liner 3 are laminated in this order.

In the pressure-sensitive adhesive sheet 10 of this embodiment, the moisture permeability P of the pressure-sensitive adhesive layer 1 determined by the following test is 900 g/(m^{2·}24 h) or more.

Test: a laminate including the pressure-sensitive adhesive layer 1 having a thickness of 25 µm and a polyurethane film having a thickness of 30 µm is produced. The laminate is bonded to a glass vessel accommodating water so as to close the opening of the glass vessel. The glass vessel is allowed to stand for 24 hours under the conditions of a temperature of 40°C and a humidity of 30%RH, and the weight of water that has permeated the laminate from the inside of the glass vessel is determined. The ratio of the weight (g) of water to the opening area (m²) of the opening of the glass vessel is specified as the moisture permeability P.

A detailed method of measuring the moisture permeability P of the pressure-sensitive adhesive layer 1 is described below with reference to FIG. 2. First, the pressure-sensitive adhesive layer 1 having a thickness of 25 µm and having the same composition as that of the pressure-sensitive adhesive layer 1 of the pressure-sensitive adhesive sheet 10 is formed on a release liner to produce a laminate of the release liner and the pressure-sensitive adhesive layer 1. The pressure-sensitive adhesive layer 1 may be produced by a method to be described later. The entire surface of the pressure-sensitive adhesive layer 1 of the obtained laminate is then superimposed on a polyurethane film 5 (thickness: 30 µm), and a 2 kg roller is reciprocated once to pressure-bond the laminate and the polyurethane film to each other. As the polyurethane film 5, a film that has sufficiently high moisture permeability as compared to that of the pressure-sensitive adhesive layer 1 and that hardly affects the value of the moisture permeability P is used. Next, the release liner is peeled off from the pressure-sensitive adhesive layer 1. Thus, a laminate 20 including the pressure-sensitive adhesive layer 1 and the polyurethane film 5 is produced. As required, the laminate 20 is cut so that the shape and size thereof may be adjusted. As an example, the shape and the size are adjusted as follows: the laminate 20 has a circular shape in plan view and its diameter is 50 mm.

Next, a glass vessel 30 accommodating water (distilled water) 35 is prepared. The glass vessel 30 has an opening 31, and has, for example, a bottomed cylindrical shape having an inner diameter of 40 mm and a height of 40 mm. The volume of the water 35 accommodated in the glass vessel 30 is, for example, 10 mL. Next, the laminate 20 is bonded to the glass vessel 30 so as to close the opening 31 of the glass vessel 30 (FIG. 2). Specifically, the pressure-sensitive adhesive layer 1 of the laminate 20 is bonded to an end surface of the glass vessel 30 to seal the internal space of the glass vessel 30. Thus, a measurement object 50 is obtained.

Next, the glass vessel 30 (specifically, the measurement object 50) is set in a commercially available thermo-hygrostat, and allowed to stand for 24 hours under the conditions of a temperature of 40°C and a humidity of 30%RH. At this time, part of the water 35 is vaporized, permeates the laminate 20, and is discharged to the outside from the inside of the glass vessel 30. A value (W1-W2) obtained by subtracting the weight W2 (g) of the measurement object 50 after being allowed to stand for 24 hours from the weight W1 (g) of the measurement object 50 immediately after production is specified as the weight W (g) of water (specifically, water vapor) that has permeated the laminate 20 from the inside of the glass vessel 30. The ratio W/A of the weight W (g) of water having permeated the laminate 20 to the opening area A (m²) of the opening 31 of the glass vessel 30 may be specified as the moisture permeability P. The opening area A (m²) of the opening 31 may be calculated by, for example, the formula (r/2)²×π based on the inner diameter "r" (m) of the glass vessel 30.

According to investigations made by the inventors of the present invention, in a case where the moisture permeability P of the pressure-sensitive adhesive layer 1 is 900 g/(m^{2·}24 h) or more, when the pressure-sensitive adhesive sheet 10 is attached to skin, stuffiness of the skin is suppressed, and hence irritation of the skin tends to be suppressed.

The moisture permeability P of the pressure-sensitive adhesive layer 1 is preferably 930 g/(m^{2·}24 h) or more, and may be 950 g/(m^{2·}24 h) or more, 980 g/(m^{2·}24 h) or more, 1000 g/(m^{2·}24 h) or more, 1100 g/(m^{2·}24 h) or more, 1200 g/(m^{2·}24 h) or more, 1300 g/(m^{2·}24 h) or more, or 1400 g/(m^{2·}24 h) or more. The upper limit of the moisture permeability P is not particularly limited, is, for example, 5000 g/(m^{2·}24 h) or less, and may be 3000 g/(m^{2·}24 h) or less.

### (Pressure-sensitive Adhesive Layer)

As described above, the pressure-sensitive adhesive layer 1 is formed from the pressure-sensitive adhesive composition containing the water-dispersed polymer. In the pressure-sensitive adhesive composition, the water-dispersed polymer is emulsified in water, and has a particulate shape. In other words, the pressure-sensitive adhesive composition includes particles of the water-dispersed polymer. The particles of the water-dispersed polymer may be present as single particles (primary particles) without being aggregated in water, or may be aggregated in water to form aggregates. The particles may each be a core-shell type having a core and a shell covering the core.

The water-dispersed polymer may be a homopolymer or a copolymer. Examples of the copolymer include a random copolymer, a block copolymer, and a graft copolymer. The pressure-sensitive adhesive composition may contain two or more kinds of the water-dispersed polymers.

The water-dispersed polymer is preferably a (meth)acrylic polymer. The term "(meth)acryl" as used herein means "acryl" and/or "methacryl."

The (meth)acrylic polymer contains, for example, a constituent unit derived from a (meth)acrylic acid alkyl ester. The (meth)acrylic acid alkyl ester is a compound having an alkyl group at an ester terminal. The number of carbon atoms of the alkyl group is, for example, from 1 to 20, and may be from 1 to 12 or from 1 to 9. The alkyl group may be linear or may have a branch.

According to investigations made by the inventors of the present invention, when the average number of carbon atoms of the alkyl group in the (meth)acrylic acid alkyl ester is regulated to be 7.0 or less, the moisture permeability of the pressure-sensitive adhesive layer 1 tends to improve.

According to another aspect of the present invention, there is provided a pressure-sensitive adhesive sheet including the pressure-sensitive adhesive layer 1 formed from the pressure-sensitive adhesive composition containing the water-dispersed polymer, wherein the water-dispersed polymer is a (meth)acrylic polymer having a constituent unit derived from a (meth)acrylic acid alkyl ester, and wherein the average number of carbon atoms of the alkyl group in the (meth)acrylic acid alkyl ester is 7.0 or less.

The average number of carbon atoms of the alkyl group in the (meth)acrylic acid alkyl ester is preferably 6.8 or less, and may be 6.5 or less, 6.3 or less, 6.0 or less, 5.8 or less, 5.5 or less, or 5.3 or less. The moisture permeability of the pressure-sensitive adhesive layer 1 tends to improve as the average number of carbon atoms of the alkyl group decreases. However, when the average number of carbon atoms of the alkyl group is too small, compatibility between the (meth)acrylic polymer and an organic liquid component to be described later may be reduced. From the viewpoint of the compatibility between the (meth)acrylic polymer and the organic liquid component, the lower limit of the average number of carbon atoms of the alkyl group is, for example, 2.0 or more, and may be 3.0 or more, 4.0 or more, 4.5 or more, or 5.0 or more. The lower limit of the average number of carbon atoms of the alkyl group may be 6.0 or more or 6.5 or more in some cases.

The average number of carbon atoms of the alkyl group herein is the sum of values each obtained by multiplying the number of carbon atoms of the alkyl group of each (meth)acrylic acid alkyl ester by a weight ratio of the constituent unit derived from each (meth)acrylic acid alkyl ester with respect to all constituent units derived from (meth)acrylic acid alkyl esters. As an example, in Example 1 to be described later, a (meth)acrylic polymer is synthesized by polymerizing a monomer group including, as the (meth)acrylic acid alkyl esters, 30 parts by weight of 2-ethylhexyl acrylate and 65 parts by weight of n-butyl acrylate. In this (meth)acrylic polymer, the average number of carbon atoms of the alkyl groups in the (meth)acrylic acid alkyl esters is calculated as 5.26 by the expression: 8×(30/95)+4×(65/95).

In this embodiment, it is preferred that the (meth)acrylic acid alkyl ester include a first (meth)acrylic acid alkyl ester having an alkyl group having 1 to 7 carbon atoms, and it is more preferred that the (meth)acrylic acid alkyl ester further include a second (meth)acrylic acid alkyl ester having an alkyl group having 8 to 12 carbon atoms together with the first (meth)acrylic acid alkyl ester. In particular, when the (meth)acrylic acid alkyl ester includes both the first (meth)acrylic acid alkyl ester and the second (meth)acrylic acid alkyl ester, and the average number of carbon atoms of the alkyl groups is adjusted to be 7.0 or less, the compatibility between the (meth)acrylic polymer and the organic liquid component, and the moisture permeability of the pressure-sensitive adhesive layer 1 are easily adjusted as appropriate. The (meth)acrylic acid alkyl ester may contain a third (meth)acrylic acid alkyl ester having an alkyl group having 13 or more carbon atoms, but it is preferred that the (meth)acrylic acid alkyl ester be free of the third (meth)acrylic acid alkyl ester.

The number of carbon atoms of the alkyl group in the first (meth)acrylic acid alkyl ester is preferably 6 or less, and may be 5 or less, or 4 or less. The lower limit of the number of carbon atoms of the alkyl group may be 2 or more. The number of carbon atoms of the alkyl group is preferably from 1 to 4.

Examples of the first (meth)acrylic acid alkyl ester include methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, n-pentyl (meth)acrylate, isopentyl (meth)acrylate, n-hexyl (meth)acrylate, isohexyl (meth)acrylate, n-heptyl (meth)acrylate, and isoheptyl (meth)acrylate. The (meth)acrylic acid alkyl ester includes, as the first (meth)acrylic acid alkyl ester, preferably at least one selected from the group consisting of: n-butyl acrylate; and isobutyl acrylate, and more preferably n-butyl acrylate.

In the (meth)acrylic polymer, the weight ratio of the constituent unit derived from the first (meth)acrylic acid alkyl ester with respect to all constituent units derived from the (meth)acrylic acid alkyl esters is, for example, 20 wt% or more, and may be 30 wt% or more, 40 wt% or more, 50 wt% or more, or 60 wt% or more. The upper limit of the weight ratio is, for example, 95 wt% or less, and may be 90 wt% or less, 80 wt% or less, or 70 wt% or less.

The number of carbon atoms of the alkyl group in the second (meth)acrylic acid alkyl ester is preferably 11 or less, and may be 10 or less, or 9 or less. The number of carbon atoms of the alkyl group is preferably from 8 to 9.

Examples of the second (meth)acrylic acid alkyl ester include n-octyl (meth)acrylate, isooctyl (meth)acrylate, 2-ethylhexyl (meth)acrylate, n-nonyl (meth)acrylate, isononyl (meth)acrylate, n-decyl (meth)acrylate, n-undecyl (meth)acrylate, and n-dodecyl (meth)acrylate. The (meth)acrylic acid alkyl ester preferably includes 2-ethylhexyl acrylate as the second (meth)acrylic acid alkyl ester.

In the (meth)acrylic polymer, the weight ratio of the constituent unit derived from the second (meth)acrylic acid alkyl ester with respect to all constituent units derived from the (meth)acrylic acid alkyl esters is, for example, 80 wt% or less, and may be 70 wt% or less, 60 wt% or less, 50 wt% or less, or 40 wt% or less. The lower limit of the weight ratio is, for example, 5 wt% or more, and may be 10 wt% or more, 20 wt% or more, or 30 wt% or more.

The content ratio of the constituent units derived from the (meth)acrylic acid alkyl esters in the (meth)acrylic polymer is, for example, 50 wt% or more, and may be 60 wt% or more, 70 wt% or more, 80 wt% or more, 90 wt% or more, or 95 wt% or more. The upper limit of the content ratio is not particularly limited and is, for example, 99 wt% or less.

The (meth)acrylic polymer may contain a constituent unit derived from another monomer copolymerizable with the (meth)acrylic acid alkyl ester. Examples of the other monomer include a carboxyl group-containing monomer and a silane-based monomer. The other monomers may be used alone or in combination thereof.

The (meth)acrylic polymer preferably contains a constituent unit derived from a carboxyl group-containing monomer. The constituent unit may contribute to stabilization of the particles of the water-dispersed polymer in the pressure-sensitive adhesive composition. The carboxyl group-containing monomer is a compound containing a carboxyl group in a structure thereof and containing a polymerizable unsaturated double bond, such as a (meth)acryloyl group or a vinyl group. Examples of the carboxyl group-containing monomer include (meth)acrylic acid, carboxyethyl (meth)acrylate, carboxypentyl (meth)acrylate, (meth)acryloyloxyethyl succinic acid, itaconic acid, maleic acid, fumaric acid, and crotonic acid, and acrylic acid (AA) is preferred.

It is preferred that the (meth)acrylic polymer contain, for example, a constituent unit derived from a silane-based monomer. The silane-based monomer is a radically polymerizable compound having a silicon atom and is preferably a silane compound having a (meth)acryloyl group. It is more preferred that the silane-based monomer have an alkoxysilyl group. Examples of the silane-based monomer include 3-(meth)acryloyloxypropyltrimethoxysilane, 3-(meth)acryloyloxypropyltriethoxysilane, 3-(meth)acryloyloxypropylmethyldimethoxysilane, 3-(meth)acryloyloxypropylmethyldiethoxysilane, 10-(meth)acryloyloxydecyltrimethoxysilane, 10-(meth)acryloyloxydecyltriethoxysilane, vinyltrimethoxysilane, vinyltriethoxysilane, 4-vinylbutyltrimethoxysilane, 4-vinylbutyltriethoxysilane, 8-vinyloctyltrimethoxysilane, and 8-vinyloctyltriethoxysilane.

The silane-based monomer undergoes hydrolysis during emulsification and/or emulsion polymerization in the presence of water to form a silanol group (-SiOH), for example. That is, when the (meth)acrylic polymer is synthesized by using the silane-based monomer in the presence of water, the constituent unit derived from the silane-based monomer has, for example, a silanol group. In this case, when the pressure-sensitive adhesive layer 1 is produced from the pressure-sensitive adhesive composition, particles of the (meth)acrylic polymer are cross-linked (silanol crosslinking) through a condensation reaction between silanol groups. According to this method, a structure in which a plurality of particles of the water-dispersed polymer are cross-linked is formed in the pressure-sensitive adhesive layer 1.

The other monomer is not limited to the above-mentioned monomers. Examples of the other monomer may include: a sulfoxyl group-containing monomer, such as styrenesulfonic acid, allylsulfonic acid, sulfopropyl (meth)acrylate, (meth)acryloyloxynaphthalenesulfonic acid, or acrylamidomethylpropanesulfonic acid; a hydroxyl group-containing monomer, such as (meth)acrylic acid hydroxyethyl ester or (meth)acrylic acid hydroxypropyl ester; an amide group-containing monomer, such as (meth)acrylamide, dimethyl (meth)acrylamide, N-butyl acrylamide, N-methylol (meth)acrylamide, or N-methylolpropane (meth)acrylamide; a (meth)acrylic acid alkylaminoalkyl ester, such as (meth)acrylic acid aminoethyl ester, (meth)acrylic acid dimethylaminoethyl ester, or (meth)acrylic acid tert-butylaminoethyl ester; a (meth)acrylic acid alkoxyalkyl ester, such as (meth)acrylic acid methoxyethyl ester or (meth)acrylic acid ethoxyethyl ester; a (meth)acrylic acid ester containing an alkoxy group (or an ether bond in a side chain), such as (meth)acrylic acid methoxyethylene glycol ester, (meth)acrylic acid tetrahydrofurfuryl ester, (meth)acrylic acid methoxyethylene glycol ester, (meth)acrylic acid methoxydiethylene glycol ester, (meth)acrylic acid methoxypolyethylene glycol ester, or (meth)acrylic acid methoxypolypropylene glycol ester; and a vinyl-based monomer, such as (meth)acrylonitrile, vinyl acetate, vinyl propionate, N-vinyl-2-pyrrolidone, methylvinylpyrrolidone, vinylpyridine, vinylpiperidine, vinylpyrimidine, vinyl piperazine, vinylpyrazine, vinylpyrrole, vinylimidazole, vinylcaprolactam, vinyloxazole, or vinylmorpholine.

The content ratio of the constituent unit derived from the other monomer in the (meth)acrylic polymer is, for example, more than 0 wt%, and may be from 0.1 wt% to 50 wt%, from 1 wt% to 30 wt%, from 2 wt% to 20 wt%, or from 3 wt% to 10 wt%.

The content ratio of the constituent unit derived from the carboxyl group-containing monomer in the (meth)acrylic polymer is, for example, 0.1 wt% or more, and may be 1 wt% or more, 2 wt% or more, or 3 wt% or more. The content ratio is, for example, 25 wt% or less, and may be 20 wt% or less, or 10 wt% or less.

The content ratio of the constituent unit derived from the silane-based monomer in the (meth)acrylic polymer is, for example, 0.01 wt% or more. The content ratio is, for example, 10 wt% or less, and may be 1 wt% or less, or 0.1 wt% or less.

As described above, a pressure-sensitive adhesive layer included in a related-art pressure-sensitive adhesive sheet is formed from, for example, a pressure-sensitive adhesive composition containing a polymer synthesized by polymerizing a monomer group in an organic solvent. According to the investigations made by the inventors of the present invention, in a configuration in which an organic solvent is used, when the content ratio of a constituent unit derived from a hydrophilic monomer such as methoxyethyl acrylate (MEA) is high in the polymer, the moisture permeability of the pressure-sensitive adhesive layer tends to improve. However, in this embodiment, when the content ratio of a constituent unit derived from a hydrophilic monomer is high in the water-dispersed polymer, the water-dispersed polymer is dissolved into a dispersion medium (specifically, water) of the pressure-sensitive adhesive composition, and the viscosity of the pressure-sensitive adhesive composition tends to increase excessively. The dissolution of the water-dispersed polymer into the dispersion medium may occur significantly when the pressure-sensitive adhesive composition is in a neutral state (pH of about 7). The pressure-sensitive adhesive composition having an excessively increased viscosity is significantly poor in applicability, and hence production of a pressure-sensitive adhesive layer by using such pressure-sensitive adhesive composition tends to be difficult.

From the viewpoint of appropriately adjusting the applicability of the pressure-sensitive adhesive composition, it is preferred that the content ratio of a constituent unit derived from a hydrophilic monomer in the water-dispersed polymer be low. The content ratio of a constituent unit derived from a hydrophilic monomer (in particular, MEA) in the water-dispersed polymer is, for example, 10 wt% or less, and may be 5 wt% or less, 1 wt% or less, or 0.1 wt% or less. The water-dispersed polymer may be substantially free of any constituent unit derived from a hydrophilic monomer (in particular, MEA). The hydrophilic monomer herein means a monomer having a solubility exceeding 0.140 g/100 mL in water at 25°C. As an example, the (meth)acrylic acid alkyl ester for forming the constituent unit of the water-dispersed polymer preferably has a solubility of 0.140 g/100 mL or less in water at 25°C.

The glass transition temperature (Tg) of the (meth)acrylic polymer is, for example, from -10°C to 30°C, and may be from -5°C to 20°C, from 0°C to 15°C, or from 5°C to 10°C in terms of calculated theoretical value determined by the Fox equation.

The weight average molecular weight of the (meth)acrylic polymer is, for example, from 1000 to 10000000, and may be from 5000 to 5000000, from 10000 to 1000000, or from 50000 to 800000. The weight average molecular weight of the (meth)acrylic polymer may be controlled by the amounts of a polymerization initiator, a chain transfer agent, an emulsifier, and the like used during polymerization, reaction conditions, and the like.

The (meth)acrylic polymer may be synthesized through emulsion polymerization using an emulsion of a group of monomers serving as a raw material. In the emulsion polymerization, an emulsifier (surfactant) and a polymerization initiator, and a chain transfer agent and the like as required may be appropriately used. A method for the emulsion polymerization is, for example, a batch loading method (batch polymerization method), a monomer dropping method, or a monomer emulsion dropping method. In the monomer dropping method, a continuous dropping method or a division dropping method may be selected as appropriate. Those methods may be combined as appropriate. Reaction conditions for the emulsion polymerization may be adjusted as appropriate in accordance with the group of monomers or the like, and a polymerization temperature is from 20°C to 100°C, and a polymerization time is from 30 minutes to 24 hours, as an example.

Examples of the polymerization initiator include: azo-based initiators, such as 2,2'-azobisisobutyronitrile, 2,2'-azobis(2-methylpropionamidine) disulfate, 2,2'-azobis(2-amidinopropane) dihydrochloride, 2,2'-azobis[2-(5-methyl-2-imidazolin-2-yl)propane] dihydrochloride, 2,2'-azobis(N,N'-dimethyleneisobutylamidine), and 2,2'-azobis[N-(2-carboxyethyl)-2-methylpropionamidine] hydrate; persulfate salts, such as potassium persulfate and ammonium persulfate; peroxide-based initiators, such as benzoyl peroxide, tert-butyl hydroperoxide, and hydrogen peroxide; substituted ethane-based initiators such as phenyl-substituted ethane; aromatic carbonyl compounds; and redox initiators, such as a combination of a persulfate salt and sodium hydrogen sulfite, and a combination of a peroxide and sodium ascorbate. Of those, azo-based initiators are preferred. The usage amount of the polymerization initiator is, for example, from 0.005 part by weight to 1 part by weight with respect to 100 parts by weight of the group of monomers.

Examples of the chain transfer agent include mercaptans such as dodecanethiol. The usage amount of the chain transfer agent is, for example, from 0.001 part by weight to 0.5 part by weight, and may be from 0.01 part by weight to 0.4 part by weight, or from 0.01 part by weight to 0.04 part by weight, with respect to 100 parts by weight of the group of monomers.

Examples of the emulsifier include: anionic emulsifiers, such as sodium lauryl sulfate, ammonium lauryl sulfate, sodium dodecylbenzenesulfonate, a sodium polyoxyethylene alkyl ether sulfate, an ammonium polyoxyethylene alkyl phenyl ether sulfate, and a sodium polyoxyethylene alkyl phenyl ether sulfate; and nonionic emulsifiers, such as a polyoxyethylene alkyl ether and a polyoxyethylene alkyl phenyl ether. The usage amount of the emulsifier is, for example, from 0.2 part by weight to 10 parts by weight, and may be from 0.5 part by weight to 5 parts by weight, with respect to 100 parts by weight of the group of monomers.

The dispersion medium used in the emulsion polymerization preferably contains water. The dispersion medium may contain an organic solvent together with water. The usage amount of the dispersion medium is, for example, from 30 parts by weight to 80 parts by weight, and may be from 40 parts by weight to 70 parts by weight, with respect to 100 parts by weight of the group of monomers.

The (meth)acrylic polymer may also be synthesized by a method except the emulsion polymerization. In this case, the pressure-sensitive adhesive composition may be prepared by dispersing the synthesized (meth)acrylic polymer in the dispersion medium with an emulsifier.

The content ratio of the water-dispersed polymer (in particular, the (meth)acrylic polymer) in the pressure-sensitive adhesive composition is not particularly limited and is, for example, from 10 wt% to 90 wt%.

In the pressure-sensitive adhesive composition, the average particle diameter of the particles of the water-dispersed polymer is, for example, 1000 nm or less, and may be 700 nm or less, 500 nm or less, 400 nm or less, 300 nm or less, or 200 nm or less. When the average particle diameter of the particles of the water-dispersed polymer is 200 nm or less, compatibility between the water-dispersed polymer and the organic liquid component tends to be satisfactory. The lower limit of the average particle diameter of the particles of the water-dispersed polymer is not particularly limited, is, for example, 50 nm or more, and may be 100 nm or more. The term "average particle diameter" as used herein means an average particle diameter (volume average particle diameter) on a volume basis measured by a dynamic light scattering method. The average particle diameter of the particles of the water-dispersed polymer may be adjusted by reaction conditions and the like during the synthesis of the water-dispersed polymer.

The pressure-sensitive adhesive composition contains water as the dispersion medium. Typically, the pressure-sensitive adhesive composition is an oil-in-water type (O/W type) emulsion. The pressure-sensitive adhesive composition may contain an organic solvent as the dispersion medium in addition to water. The content ratio of the dispersion medium in the pressure-sensitive adhesive composition is not particularly limited and is, for example, from 10 wt% to 90 wt%.

The pressure-sensitive adhesive composition preferably contains an emulsifier (surfactant). Examples of the emulsifier include those described above. The content ratio of the emulsifier in the pressure-sensitive adhesive composition is not particularly limited, is from 0.2 wt% to 10 wt%, for example, and is preferably from 2 wt% to 5 wt%.

The pressure-sensitive adhesive composition may further include the organic liquid component. When the organic liquid component is included, the following tendency is observed: the modulus in a low-deformation region of the pressure-sensitive adhesive layer 1 is decreased, satisfactory adhesiveness of a pressure-sensitive adhesive sheet to the skin is maintained, damage to the stratum corneum can be reduced when the sheet is peeled off, and pain can also be reduced when the sheet is peeled off. The organic liquid component is also suitable for improving the moisture permeability of the pressure-sensitive adhesive layer 1 formed from the pressure-sensitive adhesive composition including the water-dispersed polymer.

The organic liquid component is a component that is liquid at room temperature (25°C) and is preferably compatible with the water-dispersed polymer. The term "compatible" means a state in which the organic liquid component is uniformly dissolved and incorporated into the water-dispersed polymer in the pressure-sensitive adhesive composition, and separation cannot be visually observed. It is preferred that the organic liquid component hardly migrate from the pressure-sensitive adhesive sheet 10 to a medical tool, a medical device, or the like during use of the pressure-sensitive adhesive sheet 10.

It is preferred that the organic liquid component contain a carboxylic acid ester. A carboxylic acid for forming the carboxylic acid ester may be a monobasic acid or a polybasic acid. The carboxylic acid may be a saturated fatty acid or an unsaturated fatty acid. The carboxylic acid may be linear or branched. The number of carbon atoms of the carboxylic acid is not particularly limited, is, for example, from 1 to 18, and may be from 5 to 18, or from 8 to 18. Examples of the carboxylic acid include myristic acid, myristoleic acid, palmitic acid, isopalmitic acid, stearic acid, isostearic acid, lauric acid, caprylic acid, capric acid, lactic acid, phthalic acid, oleic acid, dimethyloctanoic acid, 2-ethylhexanoic acid, succinic acid, adipic acid, sebacic acid, trimellitic acid, linoleic acid, and linolenic acid.

An alcohol for forming the carboxylic acid ester may be a monohydric alcohol or a polyhydric alcohol. The valence of the polyhydric alcohol is, for example, from 2 to 4. The alcohol may be linear or branched. The number of carbon atoms of the alcohol is not particularly limited, and is, for example, from 1 to 18, and may be from 1 to 10, or from 1 to 5. Examples of the alcohol include ethanol, isopropanol, butanol, hexanol, octanol, myristyl alcohol, cetyl alcohol, isocetyl alcohol, stearyl alcohol, isostearyl alcohol, oleyl alcohol, hexyldecanol, octyldodecanol, ethylene glycol, propylene glycol, glycerin, trimethylolpropane, pentaerythritol, and sorbitan.

Specific examples of the carboxylic acid ester include ethyl myristate, isopropyl myristate, isocetyl myristate, octyldodecyl myristate, isopropyl palmitate, isostearyl palmitate, butyl stearate, isocetyl stearate, isopropyl isostearate, hexyl laurate, isostearyl laurate, cetyl lactate, myristyl lactate, diethyl phthalate, octyldodecyl oleate, hexyldecyl dimethyloctanoate, cetyl 2-ethylhexanoate, isocetyl 2-ethylhexanoate, stearyl 2-ethylhexanoate, dioctyl succinate, diisostearyl adipate, diisocetyl sebacate, trioleyl trimellitate, triisocetyl trimellitate, propylene glycol dicaprylate, propylene glycol dicaprate, propylene glycol diisostearate, glyceryl monocaprylate, glyceryl tricaprylate, glyceryl tri(2-ethylhexanoate), glyceryl tricaprate, glyceryl trilaurate, glyceryl triisostearate, glyceryl trioleate, trimethylolpropane tri(2-ethylhexanoate), and sorbitan trioleate. The organic liquid component preferably contains glyceryl tricaprylate, sorbitan trioleate, or the like as the carboxylic acid ester, and particularly preferably contains glyceryl tricaprylate as the carboxylic acid ester.

In the pressure-sensitive adhesive composition, the blending amount of the organic liquid component is, for example, 10 parts by weight or more, and may be 20 parts by weight or more, 30 parts by weight or more, 40 parts by weight or more, 50 parts by weight or more, 60 parts by weight or more, or 70 parts by weight or more, with respect to 100 parts by weight of the water-dispersed polymer. As the blending amount of the organic liquid component increases, the moisture permeability of the pressure-sensitive adhesive layer 1 tends to improve. The upper limit of the blending amount of the organic liquid component is, for example, 120 parts by weight or less, and may be 100 parts by weight or less, or 80 parts by weight or less, with respect to 100 parts by weight of the water-dispersed polymer from the viewpoint of sufficiently ensuring the pressure-sensitive adhesive strength of the pressure-sensitive adhesive layer 1.

The pressure-sensitive adhesive composition may further contain an additive except those described above. Examples of the additive include a cross-linking agent, a tackifier, a thickener, a plasticizer, a softener, a filler, and a pigment.

The pressure-sensitive adhesive composition is preferably neutral. In the neutral pressure-sensitive adhesive composition, the particles of the water-dispersed polymer are less liable to aggregate, and stability tends to be high. The pH of the pressure-sensitive adhesive composition is, for example, from 6.0 to 8.0, and may be from 6.5 to 7.5. The pH of the pressure-sensitive adhesive composition is preferably 7.0.

The viscosity of the pressure-sensitive adhesive composition is, for example, 500 mPa·s or less, and may be 300 mPa·s or less, or 100 mPa·s or less, under the conditions of a pH of 7.0 and a temperature of 25°C. It can be said that the pressure-sensitive adhesive composition having a viscosity of 500 mPa·s or less has practically sufficient applicability. The lower limit of the viscosity of the pressure-sensitive adhesive composition is, for example, 10 mPa·s or more.

The thickness of the pressure-sensitive adhesive layer 1 is not particularly limited and is, for example, from 10 µm to 80 µm.

The gel fraction of the pressure-sensitive adhesive layer 1 is, for example, from 20% to 80%, and may be from 30% to 60%.

### (Base Material)

The base material 2 is, for example, a layered member for supporting the pressure-sensitive adhesive layer 1. The base material 2 may be a single layer or a laminate including a plurality of layers. From the viewpoint of suppressing stuffiness of skin when the pressure-sensitive adhesive sheet 10 is attached to the skin, the base material 2 preferably has sufficiently high moisture permeability as compared to that of the pressure-sensitive adhesive layer 1.

The base material 2 may be non-porous or porous. In the case where the base material 2 is porous, even when the base material 2 is thick, the moisture permeability tends to be less liable to decrease. It is preferred that the porous base material 2 have water vapor permeability that allows water vapor to permeate the base material, and such water impermeability as not to substantially allow liquid water to permeate the base material.

Examples of materials of the base material 2 include: urethane-based polymers, such as polyether urethane and polyester urethane; amide-based polymers such as polyether polyamide block polymer; acrylic polymers such as polyacrylate; polyolefin-based polymers, such as polyethylene, polypropylene, and an ethylene/vinyl acetate copolymer; and polyester-based polymers such as polyether polyester. From the viewpoint of moisture permeability, the base material 2 preferably contains a urethane-based polymer or an amide-based polymer, and particularly preferably contains a urethane-based polymer. As an example, the base material 2 may be a polyurethane film including a urethane-based polymer, or may be a laminate in which a layer containing a polyolefin-based polymer is stacked on a polyurethane film.

The thickness of the base material 2 is not particularly limited, is, for example, from 10 µm to 100 µm, and may be from 20 µm to 40 µm.

From the viewpoint of followability of the pressure-sensitive adhesive sheet 10 attached to the skin, the base material 2 preferably has, for example, a tensile strength of from 100 kg/cm² to 900 kg/cm² and a 100% modulus of from 10 kg/cm² to 100 kg/cm².

### (Release Liner)

As the release liner 3, a known release liner may be appropriately used. The release liner 3 includes, for example, a liner base material and a release layer formed on one surface of the liner base material. Examples of materials of the liner base material include those described above for the base material 2. The release layer may be formed by applying a release treatment agent to a surface of the liner base material. Examples of the release treatment agent include a silicone-based release treatment agent, a long chain alkyl-based release treatment agent, a fluorine release treatment agent, and a molybdenum sulfide-based release treatment agent.

The thickness of the release liner 3 is not particularly limited, is, for example, from 5 µm to 100 µm, and may be from 10 µm to 50 µm.

### (Pressure-sensitive Adhesive Sheet Production Method)

The pressure-sensitive adhesive sheet 10 according to this embodiment may be produced by the following method, for example. First, the pressure-sensitive adhesive composition containing a water-dispersed polymer is applied onto the release liner 3 to form a coating film. The method of applying the pressure-sensitive adhesive composition is not particularly limited, and for example, a spin coating method or a dip coating method may be used. The pressure-sensitive adhesive composition may also be applied with a wire bar or the like.

Next, the pressure-sensitive adhesive layer 1 is formed by drying the coating film. The coating film may be dried under a heating condition, for example. The temperature at which the coating film is heated is, for example, 50°C or more, and may be 100°C or more. The heating time for the coating film is, for example, 1 minute or more.

Next, the base material 2 is bonded to the pressure-sensitive adhesive layer 1. Thus, the pressure-sensitive adhesive sheet 10 can be produced.

### (Characteristics of Pressure-sensitive Adhesive Sheet)

The pressure-sensitive adhesive sheet 10 including the pressure-sensitive adhesive layer 1 tends to have a high moisture permeability. The moisture permeability of the pressure-sensitive adhesive sheet 10 is, for example, 900 g/(m^{2·}24 h) or more, and may be 930 g/(m^{2·}24 h) or more, 950 g/(m^{2·}24 h) or more, 980 g/(m^{2·}24 h) or more, 1000 g/(m^{2·}24 h) or more, 1100 g/(m^{2·}24 h) or more, 1200 g/(m^{2·}24 h) or more, 1300 g/(m^{2·}24 h) or more, or 1400 g/(m^{2·}24 h) or more. The upper limit of the moisture permeability of the pressure-sensitive adhesive sheet 10 is not particularly limited, is, for example, 5000 g/(m^{2·}24 h) or less, and may be 3000 g/(m^{2·}24 h) or less. The moisture permeability of the pressure-sensitive adhesive sheet 10 can be measured in the same manner as that for the moisture permeability P described above except that the pressure-sensitive adhesive sheet 10 having the release liner 3 removed therefrom is used instead of the laminate 20 of the polyurethane film 5 and the pressure-sensitive adhesive layer 1.

The pressure-sensitive adhesive sheet 10 according to this embodiment tends to be capable of being attached to the object (in particular, skin) with a sufficient strength via the pressure-sensitive adhesive layer 1. As an example, the pressure-sensitive adhesive sheet 10 preferably has a pressure-sensitive adhesive strength F of 0.1 N/10 mm or more with respect to a bakelite board.

The above-mentioned pressure-sensitive adhesive strength F may be measured by the following method. First, the pressure-sensitive adhesive sheet 10 to be evaluated is cut out into a test piece of 100 mm in length by 10 mm in width. Next, the release liner 3 is removed from the test piece to expose a surface of the pressure-sensitive adhesive layer 1. The entire surface of the pressure-sensitive adhesive layer 1 is superimposed on a bakelite board, and a 2 kg roller is reciprocated once to pressure-bond the test piece and the bakelite board to each other. Next, the test piece is peeled off from the bakelite board at a peel rate of 300 mm/min and a peel angle of 180° with a commercially available tensile tester. The force required to peel off the test piece from the bakelite board at this time is measured at intervals of 0.5 s per measurement at a position where numerical values are relatively stable. The average of the obtained measurement values is specified as the pressure-sensitive adhesive strength F. The above-mentioned test is conducted in an atmosphere at 23°C.

The pressure-sensitive adhesive strength F is preferably 0.3 N/10 mm or more, and may be 0.5 N/10 mm or more. The upper limit of the pressure-sensitive adhesive strength F is, for example, 5.0 N/10 mm or less, and may be 4.0 N/10 mm or less, 3.0 N/10 mm or less, 2.0 N/10 mm or less, or 1.0 N/10 mm or less.

### (Application of Pressure-sensitive Adhesive Sheet)

The pressure-sensitive adhesive sheet 10 according to this embodiment is typically used for medical purposes. Specifically, the pressure-sensitive adhesive sheet 10 may be used for pressure-sensitive adhesive bandages, surgical tapes, first-aid plasters, large plasters, dressing materials, poultices, drapes, and the like. By allowing the pressure-sensitive adhesive layer 1 to carry a drug, the pressure-sensitive adhesive sheet 10 can also be used as a transdermally absorbable drug. The pressure-sensitive adhesive sheet 10 may also be used for non-medical purposes.

### EXAMPLES

The present invention is described in more detail below by way of Examples and Comparative Examples, but the present invention is not limited thereto.

### (Example 1)

30 Parts by weight of 2-ethylhexyl acrylate (2EHA), 65 parts by weight of butyl acrylate (BA), 5 parts by weight of acrylic acid (AA), and 0.03 part by weight of 3-methacryloyloxypropyl trimethoxysilane (KBM-503, manufactured by Shin-Etsu Silicone) serving as monomer components, 0.02 part by weight of 1-dodecanethiol (LSH) serving as a chain transfer agent, 2 parts by weight of an ammonium polyoxyethylene-1-(allyloxymethyl) alkyl ether sulfate serving as an emulsifier, and 52.68 parts by weight of water were loaded into a vessel, and stirred with a homomixer so that the monomer components were emulsified. Thus, a monomer emulsion was obtained.

3.62 Parts by weight of the above-mentioned monomer emulsion, 1 part by weight of an ammonium polyoxyethylene-1-(allyloxymethyl) alkyl ether sulfate, and 50.47 parts by weight of water were loaded into a reaction vessel (separable flask) including a cooling tube, a nitrogen inlet tube, a temperature gauge, and a stirrer, and stirred for 1 hour while an inert gas was introduced. Next, 0.1 part by weight of 2,2'-azobis[N-(2-carboxyethyl)-2-methylpropionamidine] hydrate serving as a polymerization initiator was loaded, and the materials were subjected to a reaction at 60°C for 40 minutes. Further, 177.81 parts by weight of the above-mentioned monomer emulsion was added dropwise over 3 hours, followed by aging for 3 hours. Thus, a dispersion liquid containing a water-dispersed polymer was obtained.

Next, the dispersion liquid was neutralized by adding 4.73 parts by weight of 10% aqueous ammonia to the dispersion liquid, and the pH thereof was adjusted to about 7. Further, 0.6 part by weight of a thickener (Aron B-500, manufactured by TOAGOSEI CO., LTD.) was added to the dispersion liquid to provide a pressure-sensitive adhesive composition.

Next, a coating film was produced by applying the pressure-sensitive adhesive composition onto a release liner (PET-50-SCA1 manufactured by FUJIKO Co., Ltd.) so that the thickness after drying was 25 µm. The coating film was dried at 130°C for 3 minutes to form a pressure-sensitive adhesive layer (thickness: 25 µm). The pressure-sensitive adhesive layer was bonded to a base material to provide a pressure-sensitive adhesive sheet of Example 1. A polyurethane film (thickness: 30 µm) (ESMER URS210, manufactured by Nihon Matai Co., Ltd.) was used as the base material.

### (Examples 2 to 17, and Comparative Examples 1 and 2)

Pressure-sensitive adhesive sheets of Examples 2 to 17, and Comparative Examples 1 and 2 were each produced in the same manner as in Example 1 except that the kinds and blending amounts of the monomer components and additives were changed as shown in Tables 1 to 3. In each of Examples 2, 4, 6, 8, 10, 12, 13, and 15 to 17, and Comparative Example 2, after aqueous ammonia was added to the dispersion liquid, an organic liquid component was further added to the dispersion liquid to prepare the pressure-sensitive adhesive composition. In each of those Examples, the organic liquid component was compatible with the water-dispersed polymer in the pressure-sensitive adhesive composition, and was in a state where separation was not able to be visually observed.

### (Comparative Examples 3 and 4)

In each of Comparative Examples 3 and 4, a pressure-sensitive adhesive composition was prepared in the same manner as in Example 1 except that the kinds and blending amounts of the monomer components and additives were changed as shown in Table 2. However, in each of Comparative Examples 3 and 4, the viscosity of the pressure-sensitive adhesive composition excessively increased after the addition of aqueous ammonia. Thus, the pressure-sensitive adhesive composition was not able to be applied onto the release liner, and the pressure-sensitive adhesive sheet was not able to be produced.

### [Average Particle Diameter of Water-dispersed Polymer Particles]

The average particle diameter of the water-dispersed polymer particles in the pressure-sensitive adhesive composition produced in each of Examples and Comparative Examples was measured.

### [Applicability of Pressure-sensitive Adhesive Composition]

Applicability of the pressure-sensitive adhesive composition produced in each of Examples and Comparative Examples was evaluated according to the following criteria.

### ·Evaluation Criteria

Good (○): The viscosity of the pressure-sensitive adhesive composition is 500 mPa·s or less under conditions of a pH of 7.0 and a temperature of 25°C, and coating is possible without difficulty.

Poor (×): The viscosity of the pressure-sensitive adhesive composition exceeds 500 mPa·s under conditions of a pH of 7.0 and a temperature of 25°C, and applicability is poor.

### [Moisture Permeability]

The moisture permeability of the pressure-sensitive adhesive sheet produced in each of Examples and Comparative Examples was measured by the method described above. In each of Examples and Comparative Examples, the pressure-sensitive adhesive layer has a thickness of 25 µm, and the base material is a polyurethane film having a thickness of 30 µm. Accordingly, the measured moisture permeability can be regarded as the moisture permeability P of the pressure-sensitive adhesive layer 1.

### [Pressure-sensitive Adhesive Strength]

The pressure-sensitive adhesive strength F of the pressure-sensitive adhesive sheet of each of Examples and Comparative Examples was measured by the method described above.

**Table 1-1**

| | | | | Example 1 | Example 2 | Example 3 | Example 4 |
|---|---|---|---|---|---|---|---|
| Monomer component (part(s) by weight) | (Meth)acrylic acid alkyl ester | Second (meth)acrylic acid alkyl ester | INA | - | - | - | - |
| | | | 2EHA | 30 | 30 | 65 | 65 |
| | | First (meth)acrylic acid alkyl ester | BA | 65 | 65 | 30 | 30 |
| | | | MMA | - | - | - | - |
| | | Average number of carbon atoms of alkyl group | | 5.26 | 5.26 | 6.74 | 6.74 |
| | (Meth)acrvlic acid alkoxy alkyl ester | | MEA | - | - | - | - |
| | Carboxyl group-containing monomer | | AA | 5 | 5 | 5 | 5 |
| | Silane-based monomer | | KBM-503 | 0.03 | 0.03 | 0.03 | 0.03 |
| Additive (part(s) by weight) | Chain transfer agent | | LSH | 0.02 | 0.02 | 0.02 | 0.02 |
| | Organic liquid component | | COCONAD RK | - | 60 | - | 60 |
| | | | SP-O30V | - | - | - | - |
| Pressure-sensitive adhesive composition | Average particle diameter of water-dispersed polymer (nm) | | | 135 | 135 | 148 | 148 |
| | Applicability | | | ○ | ○ | ○ | ○ |
| Pressure-sensitive adhesive sheet | Moisture permeability P (g/(m^{2·}24 h)) | | | 1286 | 1483 | 1000 | 1366 |
| | Pressure-sensitive adhesive strength F (N/10 mm) | | | 3.0 | 0.9 | 3.4 | 0.7 |

**Table 1-2**

| | | | | Example 5 | Example 6 | Example 7 | Example 8 |
|---|---|---|---|---|---|---|---|
| Monomer component (part(s) by weight) | (Meth)acrylic acid alkyl ester | Second (meth)acrylic acid alkyl ester | INA | - | - | - | - |
| | | | 2EHA | 65 | 65 | 65 | 65 |
| | | First (meth)acrylic acid alkyl ester | BA | 30 | 30 | 30 | 30 |
| | | | MMA | - | - | - | - |
| | | Average number of carbon atoms of alkyl group | | 6.74 | 6.74 | 6.74 | 6.74 |
| | (Meth)acrylic acid alkoxy alkyl ester | | MEA | - | - | - | - |
| | Carboxyl group-containing monomer | | AA | 5 | 5 | 5 | 5 |
| | Silane-based monomer | | KBM-503 | 0.02 | 0.02 | 0.01 | 0.01 |
| Additive (part(s) by weight) | Chain transfer agent | | LSH | 0.02 | 0.02 | 0.01 | 0.01 |
| | Organic liquid component | | COCONAD RK | - | 60 | - | 60 |
| | | | SP-O30V | - | - | - | - |
| Pressure-sensitive adhesive composition | Average particle diameter of water-dispersed polymer (nm) | | | 151 | 151 | 148 | 148 |
| | Applicability | | | ○ | ○ | ○ | ○ |
| Pressure-sensitive adhesive sheet | Moisture permeability P (g/(m^{2·}24 h)) | | | 956 | 1240 | 934 | 1245 |
| | Pressure-sensitive adhesive strength F (N/10 mm) | | | 3.1 | 0.6 | 2.9 | 0.7 |

**Table 2-1**

| | | | | Example 9 | Example 10 | Example 11 | Example 12 |
|---|---|---|---|---|---|---|---|
| Monomer component (part(s) by weight) | (Meth)acrylic acid alkyl ester | Second (meth)acrylic acid alkyl ester | INA | - | - | - | - |
| | | | 2EHA | 68 | 68 | 68 | 68 |
| | | First (meth)acrylic acid alkyl ester | BA | 30 | 30 | 30 | 30 |
| | | | MMA | - | - | - | - |
| | | Average number of carbon atoms of alkyl group | | 6.78 | 6.78 | 6.78 | 6.78 |
| | (Meth)acrylic acid alkoxy alkyl ester | | MEA | - | - | - | - |
| | Carboxyl group-containing monomer | | AA | 2 | 2 | 2 | 2 |
| | Silane-based monomer | | KBM-503 | 0.02 | 0.02 | 0.03 | 0.03 |
| Additive (part(s) by weight) | Chain transfer agent | | LSH | 0.02 | 0.02 | 0.02 | 0.02 |
| | Organic liquid component | | COCONAD RK | - | 60 | - | 60 |
| | | | SP-O30V | - | - | - | - |
| Pressure-sensitive adhesive composition | Average particle diameter of water-dispersed polymer (nm) | | | 148 | 148 | 144 | 144 |
| | Applicability | | | ○ | ○ | ○ | ○ |
| Pressure-sensitive adhesive sheet | Moisture permeability P (g/(m^{2.}24 h)) | | | 973 | 1295 | 954 | 1310 |
| | Pressure-sensitive adhesive strength F (N/10 mm) | | | 3.0 | 0.8 | 3.4 | 0.9 |

**Table 2-2**

| | | | | Comparative Example 1 | Comparative Example 2 | Comparative Example 3 | Comparative Example 4 |
|---|---|---|---|---|---|---|---|
| Monomer component (part(s) by weight) | (Meth)acrylic acid alkyl ester | Second (meth)acrylic acid alkyl ester | INA | - | - | 65 | 65 |
| | | | 2EHA | 90 | 90 | - | - |
| | | First (meth)acrylic acid alkyl ester | BA | - | - | - | - |
| | | | MMA | 10 | 10 | - | - |
| | | Average number of carbon atoms of alkyl group | | 7.30 | 7.30 | 9.00 | 9.00 |
| | (Meth)acrylic acid alkoxy alkyl ester | | MEA | - | - | 30 | 30 |
| | Carboxyl group-containing monomer | | AA | 4 | 4 | 5 | 5 |
| | Silane-based monomer | | KBM-503 | 0.02 | 0.02 | 0.03 | 0.03 |
| Additive (part(s) by weight) | Chain transfer agent | | LSH | 0.035 | 0.035 | 0.02 | 0.02 |
| | Organic liquid component | | COCONAD RK | - | - | - | 60 |
| | | | SP-O30V | - | 30 | - | - |
| Pressure-sensitive adhesive composition | Average particle diameter of water-dispersed polymer (nm) | | | 373 | 373 | - | - |
| | Applicability | | | ○ | ○ | × | × |
| Pressure-sensitive adhesive sheet | Moisture permeability P (g/(m^{2·}24 h)) | | | 780 | 850 | - | - |
| | Pressure-sensitive adhesive strength F (N/10 mm) | | | 2.3 | 0.9 | - | - |

**Table 3**

| | | | | Example 13 | Example 14 | Example 15 | Example 16 | Example 17 |
|---|---|---|---|---|---|---|---|---|
| Monomer component (part(s) by weight) | (Meth)acryli c acid alkyl ester | Second (meth)acrylic acid alkyl ester | INA | - | - | - | - | - |
| | | | 2EHA | 65 | 47 | 47 | 47 | 47 |
| | | First (meth)acrylic acid alkyl ester | BA | 30 | 50 | 50 | 50 | - |
| | | | iBA | - | - | - | - | 50 |
| | | | MMA | - | - | - | - | - |
| | | Average number of carbon atoms of alkyl group | | 6.74 | 5.94 | 5.94 | 5.94 | 5.94 |
| | (Meth)acrylic acid alkoxy alkyl ester | | MEA | - | - | - | - | - |
| | Carboxyl group-containing monomer | | AA | 5 | 3 | 3 | 3 | 3 |
| | Silane-based monomer | | KBM-503 | 0.02 | 0.03 | 0.03 | 0.03 | 0.03 |
| Additive (part(s) by weight) | Chain transfer agent | | LSH | 0.02 | 0.02 | 0.02 | 0.02 | 0.02 |
| | Organic liquid component | | COCONA D RK | 70 | - | 60 | 70 | 60 |
| | | | SP-O30V | - | - | - | - | - |
| Pressure-sensitive adhesive composition | Average particle diameter of water-dispersed polymer (nm) | | | 151 | 200 | 200 | 200 | 200 |
| | Applicability | | | ○ | ○ | ○ | ○ | ○ |
| Pressure-sensitive adhesive sheet | Moisture permeability P (g/(m^{2.}24 h)) | | | 1410 | 1000 | 1328 | 1458 | 1473 |
| | Pressure-sensitive adhesive strength F (N/10 mm) | | | 0.49 | 3.02 | 0.87 | 0.74 | 0.65 |

Abbreviations in Tables 1 to 3 are as described below.
INA: Isononyl acrylate
2EHA: 2-Ethylhexyl acrylate
BA: n-Butyl acrylate
iBA: Isobutyl acrylate
MMA: Methyl methacrylate
MEA: Acrylic acid methoxyethyl ester
AA: Acrylic acid
KBM503: 3-Methacryloyloxypropyl trimethoxysilane (KBM-503, manufactured by Shin-Etsu Silicone)
LSH: 1-Dodecanethiol
COCONAD RK: Glyceryl tricaprylate (COCONAD RK, manufactured by Kao Corporation)
SP-O30V: Sorbitan trioleate (RHEODOL SP-O30V, manufactured by Kao Corporation)

As can be seen from Tables 1 to 3, in the pressure-sensitive adhesive sheet of each of Examples 1 to 17, the moisture permeability P of the pressure-sensitive adhesive layer was 900 g/(m^{2·}24 h) or more. According to investigations made by the inventors of the present invention, when the pressure-sensitive adhesive sheet of each of Examples was attached to skin, stuffiness of the skin was suppressed, and hence irritation of the skin tended to be suppressed as compared to Comparative Examples.

It is presumed that in each of Comparative Examples 3 and 4, due to the high content ratio of the constituent unit derived from a hydrophilic monomer (specifically, MEA) in the water-dispersed polymer, the water-dispersed polymer dissolved into the dispersion medium, and hence the viscosity of the pressure-sensitive adhesive composition excessively increased.

### (Reference Example 1)

A pressure-sensitive adhesive composition of Reference Example 1 was produced in the same manner as in Example 2 except that, in the production of the monomer emulsion, the usage amount of 3-methacryloyloxypropyl trimethoxysilane was changed to 0.02 part by weight, and that, in the production of the dispersion liquid containing the water-dispersed polymer, the monomer emulsion was not loaded into the reaction vessel in advance, and the entire amount of the monomer emulsion to be used was added dropwise after the addition of the polymerization initiator.

In the pressure-sensitive adhesive composition of Reference Example 1, the average particle diameter of particles of the water-dispersed polymer was 433 nm. In this pressure-sensitive adhesive composition, the organic liquid component and the water-dispersed polymer were not fully compatible with each other, and separation was visually observed.

From the results of Example 2 and Reference Example 1, it has been found that compatibility between the water-dispersed polymer and the organic liquid component tends to be satisfactory when the average particle diameter of the water-dispersed polymer particles is small and is about 200 nm or less.

### Industrial Applicability

The pressure-sensitive adhesive sheet according to this embodiment can be used by being attached to an object such as skin.

## Claims

1. A pressure-sensitive adhesive sheet, comprising
a pressure-sensitive adhesive layer formed from a pressure-sensitive adhesive composition containing a water-dispersed polymer,
wherein the pressure-sensitive adhesive layer has a moisture permeability of 900 g/(m^{2·}24 h) or more, which is determined by the following test:
Test: a laminate including the pressure-sensitive adhesive layer having a thickness of 25 µm and a polyurethane film having a thickness of 30 µm is produced; the laminate is bonded to a glass vessel accommodating water so as to close an opening of the glass vessel; the glass vessel is allowed to stand for 24 hours under conditions of a temperature of 40°C and a humidity of 30%RH, and a weight of water that has permeated the laminate from the inside of the glass vessel is determined; and a ratio of the weight (g) to an opening area (m²) of the opening is specified as the moisture permeability.

2. The pressure-sensitive adhesive sheet according to claim 1, wherein the water-dispersed polymer is a (meth)acrylic polymer.

3. The pressure-sensitive adhesive sheet according to claim 2, wherein the (meth)acrylic polymer has a constituent unit derived from a (meth)acrylic acid alkyl ester.

4. The pressure-sensitive adhesive sheet according to claim 3, wherein an average number of carbon atoms of an alkyl group in the (meth)acrylic acid alkyl ester is 7.0 or less.

5. The pressure-sensitive adhesive sheet according to claim 3, wherein the (meth)acrylic acid alkyl ester includes a first (meth)acrylic acid alkyl ester having an alkyl group having 1 to 7 carbon atoms.

6. The pressure-sensitive adhesive sheet according to claim 5, wherein the (meth)acrylic acid alkyl ester includes, as the first (meth)acrylic acid alkyl ester, at least one selected from the group consisting of: n-butyl acrylate; and isobutyl acrylate.

7. The pressure-sensitive adhesive sheet according to claim 5, wherein the (meth)acrylic acid alkyl ester further includes a second (meth)acrylic acid alkyl ester having an alkyl group having 8 to 12 carbon atoms.

8. The pressure-sensitive adhesive sheet according to claim 2, wherein the (meth)acrylic polymer has a constituent unit derived from a carboxyl group-containing monomer.

9. The pressure-sensitive adhesive sheet according to claim 2, wherein the (meth)acrylic polymer has a constituent unit derived from a silane-based monomer.

10. The pressure-sensitive adhesive sheet according to claim 1, wherein the pressure-sensitive adhesive composition contains water as a dispersion medium.

11. The pressure-sensitive adhesive sheet according to claim 1, wherein the pressure-sensitive adhesive composition contains a surfactant.

12. The pressure-sensitive adhesive sheet according to claim 1, wherein the pressure-sensitive adhesive composition contains an organic liquid component.

13. The pressure-sensitive adhesive sheet according to claim 12, wherein the organic liquid component contains glyceryl tricaprylate.

14. The pressure-sensitive adhesive sheet according to claim 1,
wherein the pressure-sensitive adhesive composition contains particles of the water-dispersed polymer, and
wherein the particles have an average particle diameter of 200 nm or less.

15. The pressure-sensitive adhesive sheet according to claim 1, further comprising a base material configured to support the pressure-sensitive adhesive layer.

16. The pressure-sensitive adhesive sheet according to claim 1, wherein the pressure-sensitive adhesive sheet is used for medical purposes.
